# EUROPÄISCHE PATENTSCHRIFT

(11) **EP 3 527 427 B1**
(45) Veröffentlichungstag und Bekanntmachung des Hinweises auf die Patenterteilung: **17.03.2021**
(21) Anmeldenummer: 19000021.6
(22) Anmeldetag: 11.01.2019
(51) Int. Cl.: B60R 7/00, B60P 7/08

(54) **FIXIER- UND/ODER HALTENETZ FÜR FAHRZEUGE**
FIXING AND/OR RETAINING NET FOR VEHICLES
FILET DE FIXATION ET / OU DE RETENUE POUR VÉHICULES

(30) Priorität: 17.02.2018 DE 102018001282
(43) Veröffentlichungstag der Anmeldung: 21.08.2019
(73) Patentinhaber: Nölle-Pepin GmbH & Co. KG., 58332 Schwelm (DE)
(72) Erfinder: Emde, Marc, 58285 Gevelsberg (DE)
(74) Vertreter: Lelgemann, Karl-Heinz

(56) Entgegenhaltungen:
- CN-A- 106 740 536
- DE-A1-102006 027 874
- DE-U1- 29 921 661
- GB-A- 2 133 355
- US-A1- 2009 004 420
- US-B1- 6 971 827

## Beschreibung

### "Fixier- und/oder Haltenetz für Fahrzeuge"

Die Erfindung bezieht sich auf ein Fixier- und/oder Haltenetz für Fahrzeuge, mit einem Netzteil und zumindest einem elastischen Randglied, das an einem Randabschnitt des Netzteils angebracht ist.

Derartige Fixier- und/oder Haltenetze kommen in vielfältiger Ausgestaltung in Fahrzeugen, insbesondere in Kraftfahrzeugen, aber auch in Flugzeugen, Schiffen, Eisen- und Straßenbahnen, Omnibussen, Lastkraftwagen etc. zum Einsatz. Üblicherweise sind derartige Fixier- und/oder Haltenetze an einer Aufnahme- bzw. Montagefläche angeordnet und angebracht. Um die Anordnung eines derartigen Fixier- und/oder Haltenetzes an der Aufnahme- bzw. Montagefläche mit einem möglichst geringen technisch-konstruktiven Aufwand zu bewerkstelligen, werden derartige Fixier- und/oder Haltenetze häufig mittels ihrer Randglieder an der Aufnahme- bzw. Montagefläche angebracht, wozu Randglieder des Netzteils beispielsweise in umlaufender Ausgestaltung ausgebildet sind und das die Aufnahme- bzw. Montagefläche ausbildende Wandungsteil umlaufen. Die GB 2 133 355 A offenbart ein Fixier- und/oder Haltenetz nach dem Oberbegriff von Anspruch 1.

Ausgehend von dem vorstehend geschilderten Stand der Technik liegt der Erfindung die Aufgabe zugrunde, ein Fixier- und/oder Haltenetz für Fahrzeuge der eingangs geschilderten Gattung derart weiterzubilden, dass es mit einem geringeren technisch-konstruktiven Aufwand und höheren ästhetischen Ansprüchen genügend an einer fahrzeugseitigen Aufnahme- bzw. Montagefläche anord- bzw. fixierbar ist.

Diese Aufgabe wird erfindungsgemäß dadurch gelöst, dass das elastische Randglied des Netzteils auf seiner einer fahrzeugseitigen Aufnahme- bzw. Montagefläche zugewandten Seite eine Antigleitbeschichtung aufweist, mittels der das elastische Randglied lösbar an der fahrzeugseitigen Aufnahme- bzw. Montagefläche fixierbar ist. Die Fixierung des elastischen Randglieds des Netzteils an der fahrzeugseitigen Aufnahme- bzw. Montagefläche wird nicht - wie im Stand der Technik üblich - aufgrund auf das elastische Randglied einwirkender elastischer Rückstellkräfte bewerkstelligt, sondern aufgrund der Antigleitbeschichtung, mittels der das mit dem Netzteil verbundene elastische Randglied an der fahrzeugseitigen Aufnahme- bzw. Montagefläche fixiert werden kann. Die Fixierung des elastischen Randglieds an der Aufnahme- bzw. Montagefläche ist bei Bedarf in einfacher Weise lösbar, da zwischen der der fahrzeugseitigen Aufnahme- bzw. Montagefläche zugewandten Seite des elastischen Randglieds einerseits und der fahrzeugseitigen Aufnahme- bzw. Montagefläche keine Eingriffsverbindung od.dgl. besteht. Mit einem sehr geringen Kraftaufwand ist das elastische Randglied von der fahrzeugseitigen Aufnahme- bzw. Montagefläche lösbar, falls hierzu der Bedarf besteht.

Wenn die Antigleitbeschichtung des elastischen Randglieds aus einer Vielzahl diskreter Antigleitelemente, z.B. aus einer Vielzahl Antigleitnoppen, ausgebildet ist, hat das Vorhandensein der Antigleitbeschichtung auf der der fahrzeugseitigen Aufnahme- bzw. Montagefläche zugewandten Seite des elastischen Randglieds keine spürbaren Auswirkungen auf dessen Elastizität, womit hinsichtlich der Werkstoffauswahl für die Antigleitbeschichtung eine größere Bandbreite gegeben ist.

Wenn die diskreten Antigleitelemente der Antigleitbeschichtung stochastisch auf der der fahrzeugseitigen Aufnahme- bzw. Montagefläche zugewandten Seite des elastischen Randglieds angeordnet sind, kann der Herstellungsaufwand für das mit der Antigleitbeschichtung versehene elastische Randglied möglichst gering gehalten werden.

Falls eine möglichst über die gesamte an der fahrzeugseitigen Aufnahme- bzw. Montagefläche anliegende Fläche des elastischen Randglieds gleichmäßige Anhaftung desselben an der fahrzeugseitigen Aufnahme- bzw. Montagefläche angestrebt wird, ist es vorteilhaft, wenn die diskreten Antigleitelemente der Antigleitbeschichtung in einem regelmäßigen Muster, z.B. in Längs- und Querrichtung des elastischen Randglieds gleich beabstandet, auf der der fahrzeugseitigen Aufnahme- bzw. Montagefläche zugewandten Seite des elastischen Randglieds angeordnet sind.

Vorteilhaft lässt sich die Antigleitbeschichtung des elastischen Randglieds aus Silikon ausgestalten. Dieser Werkstoff ist in einfacher Weise verarbeitbar und verfügt im Zusammenwirken mit den üblichen Ausgestaltungen fahrzeugseitiger Aufnahme- bzw. Montageflächen über gute Hafteigenschaften.

Das elastische Randglied lässt sich vorteilhaft als elastisches Band aus einem textilen Werkstoff ausgestalten. Zweckmäßigerweise ist das elastische Randglied an das Netzteil angenäht.

Gemäß einer weiteren vorteilhaften Ausführungsform ist das elastische Randglied als Gewebeband ausgebildet.

Weil das elastische Randglied als Gurtschlaufe ausgebildet ist, wobei die Gurtschlaufe einen an das Netzteil angebrachten Randgliedabschnitt und einen netzteilfreien Randgliedabschnitt aufweist, kann je nach den Abmessungen der fahrzeugseitigen Aufnahme- bzw. Montagefläche in einfacher Weise der an der fahrzeugseitigen Aufnahme- bzw. Montagefläche anhaftende Längenabschnitt der Gurtschlaufe an die betreffende Abmessung der fahrzeugseitigen Aufnahme- bzw. Montagefläche angepasst werden, da die Fixierung des Fixier- und/oder Haltenetzes an der fahrzeugseitigen Aufnahme- bzw. Montagefläche nicht aufgrund der elastischen Rückstellkräfte der Gurtschlaufe bewerkstelligt ist, sondern aufgrund der mittels der Antigleitbeschichtung des als Gurtschlaufe ausgebildeten elastischen Randglieds ausgeübten Haftkräfte. So kann auch im Rahmen der durch das Netzteil vorgegebenen Abmessungen eine Anpassung des Fixier- und/oder Haltenetzes an die Abmessungen der fahrzeugseitigen Aufnahme- bzw. Montagefläche vorgenommen werden.

Insbesondere wenn die fahrzeugseitigen Aufnahme- bzw. Montageflächen - wie üblich - etwa rechteckig ausgestaltet sind, ist es vorteilhaft, wenn das Netzteil an zwei einander gegenüberliegenden Randabschnitten jeweils ein elastisches Randglied aufweist. In Verbindung mit der Ausgestaltung der beiden elastischen Randglieder als Gurtschlaufen, kann dann ein erfindungsgemäßes Fixier- und/oder Haltenetz an in einer vergleichsweise großen Bandbreite unterschiedlich große fahrzeugseitige Aufnahme- bzw. Montageflächen angebracht werden, wobei die nach der Anbringung des Fixier- und/oder Haltenetzes an der fahrzeugseitigen Aufnahme- bzw. Montagefläche realisierbaren Abmessungen des erfindungsgemäßen Fixier- und/oder Haltenetzes in einer großen Bandbreite an die jeweilige Größe der fahrzeugseitigen Aufnahme- bzw. Montagefläche anpassbar sind. Ursächlich hierfür ist, wie vorstehend bereits erwähnt, dass die Fixierung der Gurtschlaufen und damit des Netzteils des erfindungsgemäßen Fixier- und/oder Haltenetzes an der fahrzeugseitigen Aufnahme- bzw. Montagefläche nicht aufgrund der elastischen Rückstellkräfte des Gurtschlaufenwerkstoffs bewerkstelligt wird, sondern in wesentlichen Teilen durch die Hafteigenschaften der Antigleitbeschichtung. Entsprechend kann ein und dasselbe Fixier- bzw. Haltenetz mit an diesen angebrachten Gurtschlaufen an fahrzeugseitige Aufnahme- bzw. Montageflächen mit einer größeren Bandbreite von Abmessungen angebracht werden, wobei aufgrund der üblicherweise vorgesehenen Flexibilität des Netzteils auch dieses hinsichtlich seiner Abmessungen in einer vergleichsweise großen Bandbreite an die Abmessungen der fahrzeugseitigen Aufnahme- bzw. Montagefläche anpassbar ist.

Gemäß einer weiteren vorteilhaften Ausführungsform des erfindungsgemäßen Fixier- und/oder Haltenetzes ist dessen Netzteil an zwei anderen einander gegenüberliegenden Randabschnitten jeweils mit einem Randgurt versehen, der gemeinsam mit dem Netzteil hergestellt, vorzugsweise gewebt, ist.

Im Folgenden wir die Erfindung anhand einer Ausführungsform unter Bezugnahme auf die Figuren näher erläutert. Es zeigen:
- Figur 1: eine Prinzipdarstellung einer Ausführungsform eines erfindungsgemäßen Fixier- und/oder Haltenetzes für Fahrzeuge in Vorderansicht; und
- Figur 2: eine Prinzipdarstellung der in Figur 1 gezeigten Ausführungsform des erfindungsgemäßen Fixier- und/ oder Haltenetzes in Rückansicht, wobei die in Figur 2 dargestellte Rückseite des Fixier- und/oder Haltenetzes der fahrzeugseitigen Aufnahme- bzw. Montagefläche zugewandt ist.

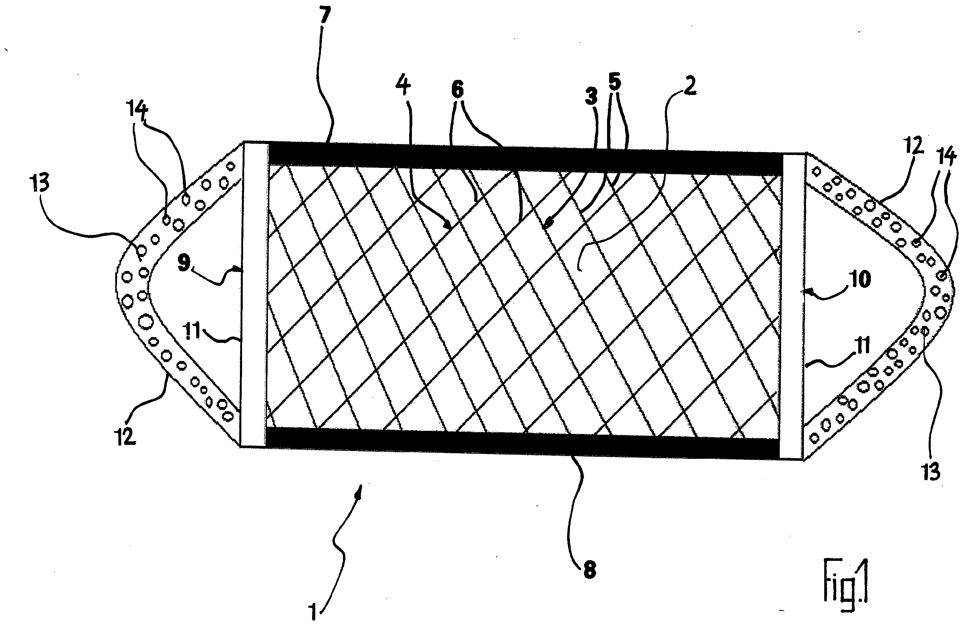

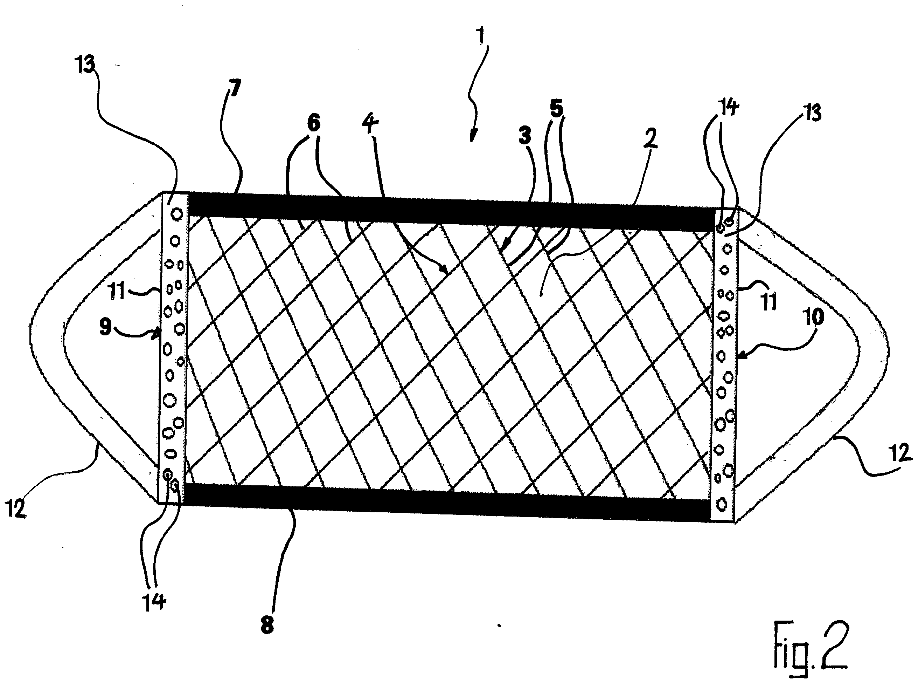

Eine in den Figuren 1 und 2 prinzipiell dargestellte Ausführungsform eines erfindungsgemäßen Fixier- und/oder Haltenetzes 1 hat ein Netzteil 2. Das Netzteil 2 ist durch zwei zueinander geneigt verlaufende Strangscharen 3, 4 gebildet, die jeweils eine Vielzahl zueinander paralleler Netzstränge 5 bzw. 6 aufweisen.

An seinem in den Figuren 1 und 2 oberen Randabschnitt und an seinem in den Figuren 1 und 2 unteren Randabschnitt ist das Netzteil 2 jeweils mit einem Randgurt 7 bzw. 8 versehen. Die Randgurte 7, 8 können in einem Arbeitsschritt mit dem Netzteil 2 hergestellt werden.

An den beiden seitlichen Randabschnitten ist das Netzteil 2 jeweils mit einem elastischen Randglied 9, 10 ausgestaltet. Im dargestellten Ausführungsbeispiel des Fixier- und/oder Haltenetzes sind die beiden elastischen Randglieder 9, 10 als Gurtschlaufen ausgebildet.

Jede Gurtschlaufe 9, 10 hat einen am Netzteil 2 angebrachten Randgliedabschnitt 11 und einen netzteilfreien Randgliedabschnitt 12.

Auf ihrer einer fahrzeugseitigen Aufnahme- bzw. Montagefläche zugewandten Rückseite ist jede Gurtschlaufe 9, 10 mit einer Antigleitbeschichtung 13 versehen, die im dargestellten Ausführungsbeispiel des erfindungsgemäßen Fixier- und/oder Haltenetzes aus diskret ausgebildeten Antigleitelementen bzw. Antigleitnoppen 14 besteht.

Mittels der Antigleitnoppen 14 ist die der fahrzeugseitigen Aufnahme- bzw. Montagefläche zugewandte Rückseite des elastischen Randglieds 9 bzw. der Gurtschlaufe 9 und des elastischen Randglieds 10 bzw. der Gurtschlaufe 10 an der fahrzeugseitigen Aufnahme- bzw. Montagefläche lösbar fixierbar. Die Antigleitbeschichtung 13 verhindert ein Rutschen der am Netzteil 2 des Fixier- und/oder Haltenetzes 1 angebrachten Randgliedabschnitts 11 auf der fahrzeugseitigen Aufnahme- bzw. Montagefläche. Die Positionierung des Fixier- und/oder Haltenetzes 1 auf der fahrzeugseitigen Aufnahme- bzw. Montagefläche beruht auf dieser in einfacher Weise lösbaren aber dennoch dauerhaften Fixierung der elastischen Randglieder 9, 10 bzw. Gurtschlaufen 9, 10 an der fahrzeugseitigen Aufnahme- bzw. Montagefläche, nicht auf der elastischen Rückstellkraft der beiden Gurtschlaufen 9, 10. Entsprechend kann mittels der Gurtschlaufen 9, 10 ein und dasselbe Fixier- und/oder Haltenetz 1 an fahrzeugseitige Aufnahme- bzw. Montageflächen angebracht werden, die hinsichtlich ihrer Abmessungen in einer vergleichsweise großen Bandbreite variieren.

Im dargestellten Ausführungsbeispiel sind die diskreten Antigleitelemente bzw. Antigleitnoppen 14 stochastisch auf der der fahrzeugseitigen Aufnahme- bzw. Montagefläche zugewandten Seite der beiden Gurtschlaufen bzw. elastischen Randglieder 9, 10 angeordnet. Sofern eine über die gesamte Haft- bzw. Fixierfläche gleichmäßige Anhaftung beabsichtigt ist, ist es selbstverständlich möglich, die Antigleitelemente bzw. Antigleitnoppen 14 in einem dem jeweiligen Anforderungsprofil genügenden Muster anzuordnen, beispielsweise gleich beabstandet sowohl in Längs- als auch in Querrichtung des elastischen Randglieds 9, 10.

Die Antigleitbeschichtung 13 bzw. deren Antigleitelemente oder -noppen können z.B. aus Silikon ausgebildet sein.

Das elastische Randglied ist im dargestellten Ausführungsbeispiel des Fixier- und/oder Haltenetzes 1 als elastisches Gewebeband aus einem textilen Werkstoff ausgebildet, wobei es im dargestellten Ausführungsbeispiel an das Netzteil 2 des Fixier- und/oder Haltenetzes 1 angenäht ist.

## Patentansprüche

1. Fixier- und/oder Haltenetz für Fahrzeuge, mit einem Netzteil (2) und zumindest einem elastischen Randglied (9, 10), das an einem Randabschnitt des Netzteils (2) angebracht ist und auf seiner einer fahrzeugseitigen Aufnahme- bzw. Montagefläche zugewandten Seite eine Antigleitbeschichtung (13) aufweist, mittels der das elastische Randglied (9, 10) lösbar an der fahrzeugseitigen Aufnahme- bzw. Montagefläche fixierbar ist, **dadurch gekennzeichnet, dass** das elastische Randglied (9, 10) als Gurtschlaufe (9, 10) ausgebildet ist, wobei die Gurtschlaufe (9, 10) einen an das Netzteil (2) angebrachten Randgliedabschnitt (11) und einen netzteilfreien Randgliedabschnitt (12) aufweist.

2. Fixier- und/oder Haltenetz nach Anspruch 1, bei dem die Antigleitbeschichtung (13) des elastischen Randglieds (9, 10) aus einer Vielzahl diskreter Antigleitelemente (14), z.B. Antigleitnoppen, ausgebildet ist.

3. Fixier- und/oder Haltenetz nach Anspruch 2, bei dem die diskreten Antigleitelemente (14) der Antigleitbeschichtung (13) stochastisch auf der der fahrzeugseitigen Aufnahme- bzw. Montagefläche zugewandten Seite des elastischen Randglieds (9, 10) angeordnet sind.

4. Fixier- und/oder Haltenetz nach Anspruch 2, bei dem die diskreten Antigleitelemente (14) der Antigleitbeschichtung (13) in einem regelmäßigen Muster, z.B. in Längs- und Querrichtung des elastischen Randglieds (9, 10) gleich beabstandet, auf der der fahrzeugseitigen Aufnahme- bzw. Montagefläche zugewandten Seite des elastischen Randglieds (9, 10) angeordnet sind.

5. Fixier- und/oder Haltenetz nach einem der Ansprüche 1 bis 4, bei dem die Antigleitbeschichtung (13) des elastischen Randglieds (9, 10) aus Silikon ausgebildet ist.

6. Fixier- und/oder Haltenetz nach einem der Ansprüche 1 bis 5, bei dem das elastische Randglied (9, 10) als elastisches Band aus einem textilen Werkstoff ausgebildet ist.

7. Fixier- und/oder Haltenetz nach einem der Ansprüche 1 bis 6, bei dem das elastische Randglied (9, 10) an das Netzteil (2) angenäht ist.

8. Fixier- und/oder Haltenetz nach einem der Ansprüche 1 bis 7, bei dem das elastische Randglied (9, 10) als Gewebeband ausgebildet ist.

9. Fixier- und/oder Haltenetz nach einem der Ansprüche 1 bis 8, bei dem das Netzteil (2) an zwei einander gegenüberliegenden Randabschnitten jeweils ein elastisches Randglied (9, 10) aufweist.

10. Fixier- und/oder Haltenetz nach einem der Ansprüche 1 bis 9, bei dem das Netzteil (2) an zwei anderen einander gegenüberliegenden Randabschnitten jeweils einen Randgurt (7, 8) aufweist, der gemeinsam mit dem Netzteil (2) hergestellt ist.

## Claims

1. A fixing and/or holding net for vehicles, having a net part (2) and at least one elastic edge element (9, 10), which is attached to an edge section of the net part (2) and has an anti-slide coating (13) on its side facing a location or mounting surface on the vehicle, by means of which anti-slide coating (13) the elastic edge element (9, 10) can be releasably fixed to the location or mounting surface on the vehicle, **characterized in that** the elastic edge element (9, 10) is designed as a belt loop (9, 10), wherein the belt loop (9, 10) has an edge element section (11) attached to the net part (2) and an edge element section (12) free of the net part.

2. The fixing and/or holding net according to Claim 1, in which the anti-slide coating (13) of the elastic edge element (9, 10) is made up of a plurality of discrete anti-slip elements (14), e.g. anti-slip nubs.

3. The fixing and/or holding net according to Claim 2, in which the discrete anti-slip elements (14) of the anti-slip coating (13) are arranged randomly on the side of the elastic edge element (9, 10) facing the location or mounting surface on the vehicle.

4. The fixing and/or holding net according to Claim 2, in which the discrete anti-slip elements (14) of the anti-slip coating (13) are arranged in a regular pattern, e.g. uniformly spaced apart in the longitudinal and transverse direction of the elastic edge element (9, 10) on the side of the elastic edge element (9, 10) facing the location or mounting surface on the vehicle.

5. The fixing and/or holding net according to one of Claims 1 to 4, in which the anti-slip coating (13) of the elastic edge element (9, 10) is made of silicone.

6. The fixing and/or holding net according to one of Claims 1 to 5, in which the elastic edge element (9, 10) is designed as an elastic band made of a textile material.

7. The fixing and/or holding net according to one of Claims 1 to 6, in which the elastic edge element (9, 10) is sewn onto the net part (2).

8. The fixing and/or holding net according to one of Claims 1 to 7, in which the elastic edge element (9, 10) is designed as fabric tape.

9. The fixing and/or holding net according to one of Claims 1 to 8, in which the net part (2) has an elastic edge element (9, 10) on each of two opposite edge sections.

10. The fixing and/or holding net according to one of Claims 1 to 9, in which the net part (2) has an edge strap (7, 8) on each of two other opposite edge sections, which edge strap (7, 8) is made together with the net part (2) .

## Revendications

1. Filet de fixation et/ou de retenue destiné à des véhicules, pourvu d'une partie formant filet (2) et d'au moins un élément de bordure (9, 10) élastique, qui est monté sur un segment de bordure de la partie formant filet (2) et sur sa face dirigée vers une surface de logement ou de montage inhérente au véhicule comporte un revêtement antiglissant (13) au moyen duquel l'élément de bordure (9, 10) est susceptible d'être fixé de manière amovible sur la surface de logement ou de montage inhérente au véhicule, **caractérisé en ce que** l'élément de bordure (9, 10) élastique est conçu sous le forme d'une boucle de ceinture (9, 10), la boucle de ceinture (9, 10) comportant un segment d'élément de bordure (12) monté sur la partie formant filet (2) et un segment d'élément de bordure (11) libre de la partie formant filet.

2. Filet de fixation et/ou de retenue selon la revendication 1, sur lequel le revêtement antiglissant (13) de l'élément de bordure (9, 10) élastique est formé d'une pluralité d'éléments antiglissants (14) discrets, par exemple de nœuds antiglissants.

3. Filet de fixation et/ou de retenue selon la revendication 2, sur lequel les éléments antiglissants (14) discrets du revêtement antiglissant (13) sont placés de manière stochastique sur la face dirigée vers la surface de logement ou de montage inhérente au véhicule de l'élément de bordure (9, 10) élastique.

4. Filet de fixation et/ou de retenue selon la revendication 2, sur lequel les éléments antiglissants (14) élastiques du revêtement antiglissant (13) sont placés selon un motif régulier, par exemple à distance égale dans la direction longitudinale et transversale de l'élément de bordure (9, 10) élastique sur la face dirigée vers la surface de logement ou de montage inhérente au véhicule de l'élément de bordure (9, 10) élastique.

5. Filet de fixation et/ou de retenue selon l'une quelconque des revendications 1 à 4, sur lequel le revêtement antiglissant (13) de l'élément de bordure (9, 10) élastique est conçu en silicone.

6. Filet de fixation et/ou de retenue selon l'une quelconque des revendications 1 à 5, sur lequel l'élément de bordure (9, 10) élastique est conçu sous la forme d'une bande élastique en une matière textile.

7. Filet de fixation et/ou de retenue selon l'une quelconque des revendications 1 à 6, sur lequel l'élément de bordure (9, 10) élastique est cousu sur la partie formant filet (2).

8. Filet de fixation et/ou de retenue selon l'une quelconque des revendications 1 à 7, sur lequel l'élément de bordure (9, 10) élastique est conçu sous la forme d'une bande de tissu.

9. Filet de fixation et/ou de retenue selon l'une quelconque des revendications 1 à 8, sur lequel sur deux segments de bordure mutuellement opposés, la partie formant filet (2) comporte respectivement un élément de bordure (9, 10) élastique.

10. Filet de fixation et/ou de retenue selon l'une quelconque des revendications 1 à 9, sur lequel sur deux autres segments de bordure mutuellement opposés, la partie formant filet (2) comporte respectivement une sangle de bordure (7, 8) qui est fabriquée conjointement avec la partie formant filet (2).
